# EUROPEAN PATENT APPLICATION

(11) **EP 2 259 181 A1**
(43) Date of publication of application: **08.12.2010**
(21) Application number: 10159645.0
(22) Date of filing: 11.07.2008
(51) Int. Cl.: G06F 9/445, G06F 9/50

(54) **Methods and systems for providing a level of access to a computing device**

(30) Priority: 11.07.2007 US 949104
(62) Divisional of application: 08796155.3
(71) Applicant: Citrix Systems, Inc., Fort Lauderdale, FL 33309 (US)
(72) Inventor: Edwards, Matthew F., Baltimore, MD 21220 (US); Underwood, Daron R., Canton, MO 48187 (US)
(74) Representative: Walker, Stephen

(57) **Abstract**

A method for responding to read requests for a data block of a storage device, the storage device providing access to a hardened appliance and providing unrestricted access to a computing device, includes the step of executing a computing device in a requested one of a plurality of execution modes. A process intercepts a read request for a first data set stored in a data block of a storage device associated with the computing device. The read request is responded to with a second data set, the second data set stored in a cache and representing an unmodified version of the first data set presently stored in the data block of the storage device.

## Description

### FIELD OF THE INVENTION

The present invention relates to methods and systems for providing access to a computing device. In particular, the present invention relates to methods and systems for executing a computing device in a requested execution mode and providing a level of access to a storage device associated with the computing device, the level selected according to the requested execution mode.

### BACKGROUND OF THE INVENTION

Previously, users could access snapshot images of a device in order to use a computer as a hardened appliance, such as a television or media player. Using snapshot images provides users with benefits such as fast boot times and the ability to select different images for different uses of the device while only executing a single operating system. However, previous systems did not typically provide users with complete access to the computer, providing instead filtered, read-only access to the hard drive of the computer. By maintaining a consistent base for all snapshot images and protecting the device from changes, the prevention of write requests improves the boot process and enables users to access the computer as a hardened appliance. However, preventing write requests may also prevent users from using the computing device as a personal desktop computer to which they may write data as well as read data.

### BRIEF SUMMARY OF THE INVENTION

In one aspect a method for responding to read requests for a data block of a storage device is shown. The storage device further provides access to a hardened appliance and provides unrestricted access to a computing device. The method is achieved by first executing a computing device in a requested execution mode chosen from a plurality of execution modes. A process then intercepts a read request for a first data set that is stored in the data block of storage within the storage device that is further associated with the computing device. The read request is responded to with a second data set, where the second data set is stored in a cache and is further representative of an unmodified version of the first data set presently stored in the data block of the storage device.

In one embodiment, the method further comprises determining whether the requested data block comprises a previous modification to the first data set.

In another embodiment, the method further comprises executing the computing device in the requested one of the plurality of execution modes. In this embodiment, the requested one of the plurality of operating system execution modes grants read-only access to a storage device associated with the computing device, where the plurality of execution modes includes an execution mode that provides read-write access to the hard drive.

Still other embodiments of the method comprise the step of intercepting, by a hook process, a read request for a first data set stored in the data block of the storage device.

In one embodiment, the method includes the step of intercepting, by a filter driver, the read request for the first data set stored in the data block of the storage device.

In another embodiment, the method includes the step of intercepting, by a write filter, the read request for the first data set stored in the data block of the storage device.

In another aspect of the method, a system for responding to read requests for a data block of a storage device that provides access to a hardened appliance and provides unrestricted access to a computing device, is shown and described.

Still other aspects show and describe a computer readable medium have executable instructions thereon that when executed provide a method for responding to read requests for a data block of a storage device that provides access to a hardened appliance and provides unrestricted access to a computing device.

In yet another aspect of the system, a system for responding to read requests for a data block of a storage device, the storage device providing both access to a hardened appliance and unrestricted access to a computing device, is shown and described. The system includes a computing device that executes in a requested execution mode, where the requested execution mode is chosen from amongst a plurality of execution modes. Also included is a cache that stores a first data set representative of an unmodified version of a second data set stored in a data block of a storage device associated with the computing device. The system also includes a process for intercepting a read request for the second data set and responding to the read request with the first data set.

In one embodiment, the system further comprises a means for determining whether the requested data block comprises a modification to the first data set, where the modification is performed during a previously-executed session.

Another embodiment includes a system where the process further comprises a means for accessing a lookup table to determine whether the requested data block comprises a modification to the first data set, where the modification was performed during a previously-executed session.

Still other embodiments include a system where the plurality of execution modes provided within the system further include an execution mode providing read-write access to the hard drive.

In one embodiment, a system is provided that utilizes a hook process to intercept a read request for a first data set stored in the data block of the storage device, while in other embodiments a write filter or filter driver are used to intercept a read request for the first data set.

Another embodiment includes a system that further comprises a second process that intercepts a request to write data to a data block of the storage device, where the request is made during a session that provides read-write access to the storage device. This embodiment can further include a cache that stores an unmodified version of the data block of the storage device, prior to the execution of the write request. Further, the embodiment can include a second process that further allows the request to write data to the data block to create a modified data set in the data block.

In one aspect, a method for providing a level of access to a computing device, where the level is selected according to a requested execution mode and a storage device associated with the computing device providing both access to a hardened appliance and unrestricted access to the computing device. The method further includes executing, during a first session, a computing device in a requested one of a plurality of execution modes available to a user of the computing device, and intercepting by a first process, a request to write data to a data block of the storage device. Still other elements of the method include recording, in a cache, an unmodified data set in the data block, prior to the execution of the write request, and granting the request to write data to the data block to create a modified data set in the data block. Further elements of the method include the steps of: executing, during a second session, the computing device in a second one of the plurality of execution modes; intercepting, by a second process, a request to read a data set in the data block of the storage device; and responding to the read request using the unmodified data set.

In one embodiment, the method further comprises the steps of: executing, during a third session, the computing device in a third one of the plurality of execution modes; intercepting, by a third process, a request to read data in the data block of the storage device; and granting the request to read data in the data block of the storage device.

Still other embodiments include a method where execution of the computing device during the second session further includes selecting a state file, and restoring the computing device to a pre-defined state responsive to data in the state file.
Other aspects of the above disclosed method include a system for providing a level of access to a computing device, the level selected according to a requested execution mode and a storage device associated with the computing device providing both access to a hardened appliance and unrestricted access to the computing device.

Still other aspects of the above disclosed method include a computer readable medium have executable instructions thereon to provide a level of access to a computing device, the level selected according to a requested execution mode and a storage device associated with the computing device providing both access to a hardened appliance and unrestricted access to the computing device.

In one aspect, a system for providing a level of access to a computing device, the level selected according to a requested execution mode and a storage device associated with the computing device providing both access to a hardened appliance and unrestricted access to the computing device is shown and described. Further aspects of the system include a first operating system executing in a requested one of a plurality of execution modes available to a user of a computing device, the requested one of the plurality of execution modes providing write access to a storage device associated with the computing device. A first process is included in the system, where the first process intercepts a request to write data to a data block of the storage device and grants the request to write data to the data block to create a modified data set in the data block. Also included in the system are a cache that stores an unmodified data set in the data block, prior to the execution of the write request, and a second operating system that executes in a second one of a plurality of execution modes, where the second one of the plurality of execution modes provides read-only access to a storage device associated with a computing device. A second process is further included, where the second process intercepts a read request for the data set stored in the data block of the storage device and responds to the read request with the unmodified data set stored in the cache.

In one embodiment, the system further includes a write filter that intercepts the write request for the data stored in the data block of the storage device.

Still another embodiment includes a means for selecting a state file, and restoring the computing device to a pre-defined state responsive to data in the state file.

One embodiment includes a system where the second process includes a means for determining whether the requested data block comprises a modification to the first data, and where the modification was performed during a previously-executed session.

In one embodiment, the system includes a second process that further includes a means for accessing a lookup table to determine whether the requested data block comprises a modification to the first data, and where the modification performed during a previously-executed session.

Still other embodiments of the system include either one of a hook process, a filter driver or a write filter able to intercept a read request for the data set stored in the data block of the storage device.

BRIEF DESCRIPTION OF THE DRAWINGS

The foregoing and other objects, aspects, features, and advantages of the invention will become more apparent and better understood by referring to the following description taken in conjunction with the accompanying drawings, in which.

FIG. 1A is a block diagram depicting an embodiment of an environment comprising client machines in communication with remote machines;

FIGs. 1B and 1C are block diagrams depicting embodiments of computers useful in connection with the methods and systems described herein;

FIG. 2 is a block diagram depicting one embodiment of a system for providing a level of access to a computing device;

FIG. 3 is a flow diagram depicting one embodiment of the steps taken in a method for providing a level of access to a computing device;

FIG. 4 is a flow diagram depicting an embodiment of the steps taken in a method for providing access to a computing device; and

FIG. 5 is a block diagram depicts one embodiment of an interception process and a cache in a system for providing access to a computing device.

DETAILED DESCRIPTION OF THE INVENTION

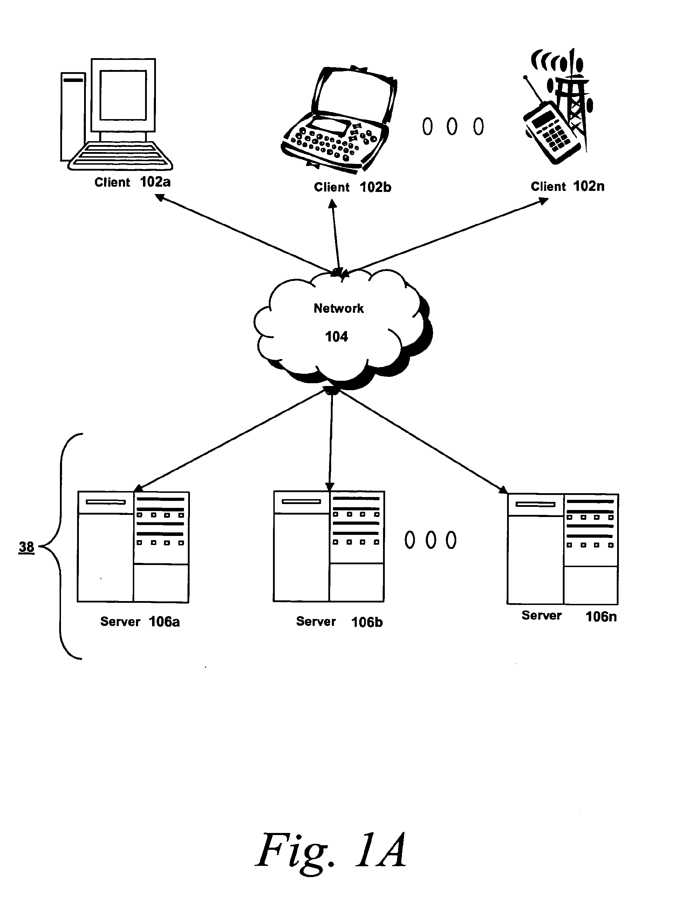

Referring now to Figure 1A, an embodiment of a network environment is depicted. In brief overview, the network environment comprises one or more clients 102a-102n (also generally referred to as local machine(s) 102, endpoint node(s) 102, endpoint(s) 102, client machine(s) 102, or client node(s) 102) in communication with one or more servers 106a-106n (also generally referred to as server(s) 106, or remote machine(s) 106) via one or more networks 104.

The network 104 can be a local-area network (LAN), such as a company Intranet, a metropolitan area network (MAN), or a wide area network (WAN), such as the Internet or the World Wide Web. In some embodiments, there are multiple networks 104 between the clients 102 and the servers 106. In one of these embodiments, a network 104' (not shown) may be a private network and a network 104 may be a public network. In another of these embodiments, a network 104 may be a private network and a network 104' a public network. In still another of these embodiments, networks 104 and 104' may both be private networks. The network 104 may be any type and/or form of network and may include any of the following: a point to point network, a broadcast network, a telecommunications network, a data communication network, a computer network, an ATM (Asynchronous Transfer Mode) network, a SONET (Synchronous Optical Network) network, a SDH (Synchronous Digital Hierarchy) network, a wireless network, a wireline network, and a wireless link, such as an infrared channel or satellite band.

Server 106 may be a file server, application server, web server, proxy server, appliance, network appliance, gateway, application gateway, gateway server, virtualization server, deployment server, SSL VPN server, or firewall. In some embodiments, a server 106 provides a remote authentication dial-in user service, and is referred to as a RADIUS server. In other embodiments, a server 106 may have the capacity to function as either an application server or as a master application server. In one embodiment, a server 106 may include an Active Directory. The server 106 may be an application acceleration appliance. For embodiments in which the server 106 is an application acceleration appliance, the server 106 may provide functionality including firewall functionality, application firewall functionality, or load balancing functionality. In some embodiments, the server 106 comprises an appliance such as one of the line of appliances manufactured by the Citrix Application Networking Group, of San Jose, CA, or Silver Peak Systems, Inc., of Mountain View, CA, or of Riverbed Technology, Inc., of San Francisco, CA, or of F5 Networks, Inc., of Seattle, WA, or of Juniper Networks, Inc., of Sunnyvale, CA.

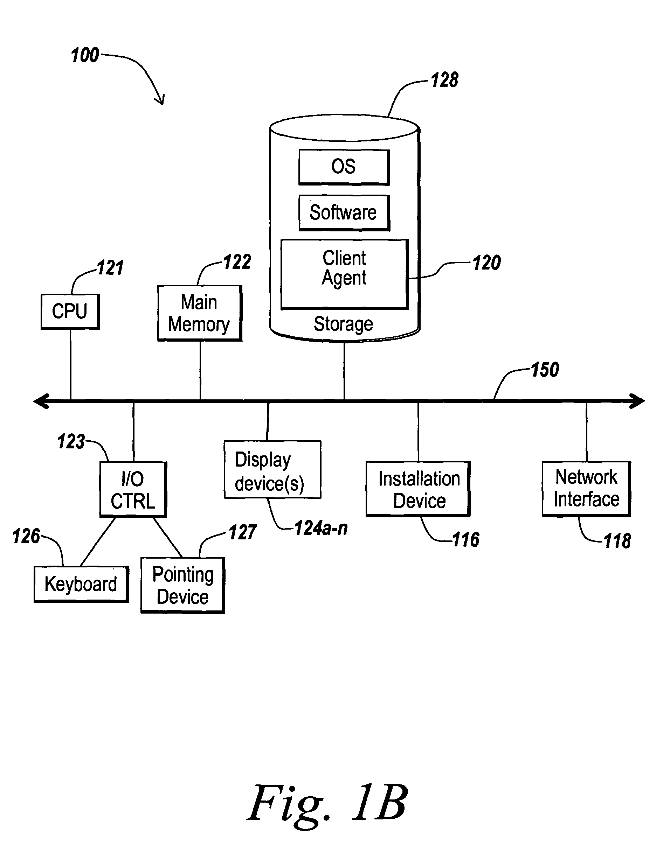

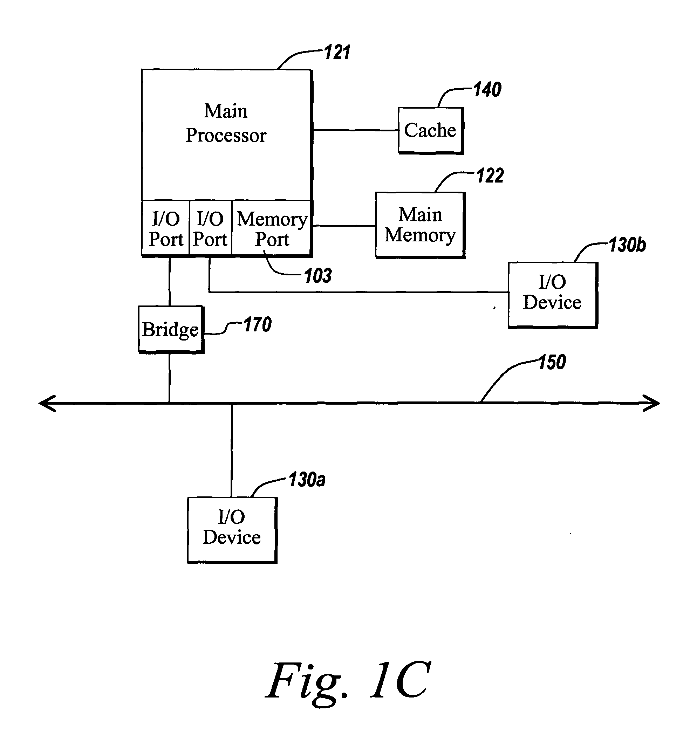

The client 102 and server 106 may be deployed as and/or executed on any type and form of computing device, such as a computer, network device or appliance capable of communicating on any type and form of network and performing the operations described herein. FIGs. 1B and 1C depict block diagrams of a computing device 100 useful for practicing an embodiment of the client 102 or a server 106. As shown in FIGs. 1B and 1C, each computing device 100 includes a central processing unit 121, and a main memory unit 122. As shown in FIG. 1B, a computing device 100 may include a storage device 128, an installation device 116, a network interface 118, an I/O controller 123, display devices 124a-n, a keyboard 126 and a pointing device 127, such as a mouse. The storage device 128 may include, without limitation, an operating system, software, and a client agent 120. As shown in FIG. 1C, each computing device 100 may also include additional optional elements, such as a memory port 103, a bridge 170, one or more input/output devices 130a-130b (generally referred to using reference numeral 130), and a cache memory 140 in communication with the central processing unit 121.

The central processing unit 121 is any logic circuitry that responds to and processes instructions fetched from the main memory unit 122. In many embodiments, the central processing unit is provided by a microprocessor unit, such as: those manufactured by Intel Corporation of Mountain View, California; those manufactured by Motorola Corporation of Schaumburg, Illinois; those manufactured by Transmeta Corporation of Santa Clara, California; the RS/6000 processor, those manufactured by International Business Machines of White Plains, New York; or those manufactured by Advanced Micro Devices of Sunnyvale, California. The computing device 100 may be based on any of these processors, or any other processor capable of operating as described herein.

Main memory unit 122 may be one or more memory chips capable of storing data and allowing any storage location to be directly accessed by the microprocessor 121 , such as Static random access memory (SRAM), Burst SRAM or SynchBurst SRAM (BSRAM), Dynamic random access memory (DRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Enhanced DRAM (EDRAM), synchronous DRAM (SDRAM), JEDEC SRAM, PC100 SDRAM, Double Data Rate SDRAM (DDR SDRAM), Enhanced SDRAM (ESDRAM), SyncLink DRAM (SLDRAM), Direct Rambus DRAM (DRDRAM), or Ferroelectric RAM (FRAM). The main memory 122 may be based on any of the above described memory chips, or any other available memory chips capable of operating as described herein. In the embodiment shown in FIG. 1B, the processor 121 communicates with main memory 122 via a system bus 150 (described in more detail below). FIG. 1C depicts an embodiment of a computing device 100 in which the processor communicates directly with main memory 122 via a memory port 103. For example, in FIG. 1C the main memory 122 may be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory 122 and is typically provided by SRAM, BSRAM, or EDRAM. In the embodiment shown in FIG. 1C, the processor 121 communicates with various I/O devices 130 via a local system bus 150. Various buses may be used to connect the central processing unit 121 to any of the I/O devices 130, including a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 may use an Advanced Graphics Port (AGP) to communicate with the display 124. FIG. 1C depicts an embodiment of a computer 100 in which the main processor 121 communicates directly with I/O device 130b via HyperTransport, Rapid I/O, or InfiniBand. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n may be present in the computing device 100. Input devices include keyboards, mice, trackpads, trackballs, microphones, and drawing tablets. Output devices include video displays, speakers, inkjet printers, laser printers, and dye-sublimation printers. The I/O devices may be controlled by an I/O controller 123 as shown in FIG. 1B. The I/O controller may control one or more I/O devices such as a keyboard 126 and a pointing device 127, e.g., a mouse or optical pen. Furthermore, an I/O device may also provide storage and/or an installation medium 116 for the computing device 100. In still other embodiments, the computing device 100 may provide USB connections (not shown) to receive handheld USB storage devices such as the USB Flash Drive line of devices manufactured by Twintech Industry, Inc. of Los Alamitos, California.

Referring again to FIG. 1B, the computing device 100 may support any suitable installation device 116, such as a floppy disk drive for receiving floppy disks such as 3.5-inch, 5.25-inch disks or ZIP disks, a CD-ROM drive, a CD-R/RW drive, a DVD-ROM drive, tape drives of various formats, USB device, hard-drive or any other device suitable for installing software and programs such as any client agent 120, or portion thereof. The computing device 100 may further comprise a storage device, such as one or more hard disk drives or redundant arrays of independent disks, for storing an operating system and other related software, and for storing application software programs such as any program related to the client agent 120. Optionally, any of the installation devices 116 could also be used as the storage device. Additionally, the operating system and the software can be run from a bootable medium, for example, a bootable CD, such as KNOPPIX®, a bootable CD for GNU/Linux that is available as a GNU/Linux distribution from knoppix.net.

Furthermore, the computing device 100 may include a network interface 118 to interface to the network 104 through a variety of connections including, but not limited to, standard telephone lines, LAN or WAN links (e.g., 802.11, T1, T3, 56kb, X.25, SNA, DECNET), broadband connections (*e.g*., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS), or the Citrix Gateway Protocol manufactured by Citrix Systems, Inc. of Ft. Lauderdale, Florida. The network interface 118 may comprise a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 may comprise or be connected to multiple display devices 124a-124n, which each may be of the same or different type and/or form. As such, any of the I/O devices 130a-130n and/or the I/O controller 123 may comprise any type and/or form of suitable hardware, software, or combination of hardware and software to support, enable or provide for the connection and use of multiple display devices 124a-124n by the computing device 100. For example, the computing device 100 may include any type and/or form of video adapter, video card, driver, and/or library to interface, communicate, connect or otherwise use the display devices 124a-124n. In one embodiment, a video adapter may comprise multiple connectors to interface to multiple display devices 124a-124n. In other embodiments, the computing device 100 may include multiple video adapters, with each video adapter connected to one or more of the display devices 124a-124n. In some embodiments, any portion of the operating system of the computing device 100 may be configured for using multiple displays 124a-124n. In other embodiments, one or more of the display devices 124a-124n may be provided by one or more other computing devices, such as computing devices 100a and 100b connected to the computing device 100, for example, via a network. These embodiments may include any type of software designed and constructed to use another computer's display device as a second display device 124a for the computing device 100. One ordinarily skilled in the art will recognize and appreciate the various ways and embodiments that a computing device 100 may be configured to have multiple display devices 124a-124n.

In further embodiments, an I/O device 130 may be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a HIPPI bus, a Super HIPPI bus, a SerialPlus bus, a SCI/LAMP bus, a FibreChannel bus, or a Serial Attached small computer system interface bus.

A computing device 100 of the sort depicted in FIGs. 1B and 1C typically operates under the control of operating systems, which control scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: WINDOWS 3.x, WINDOWS 95, WINDOWS 98, WINDOWS 2000, WINDOWS NT 3.51, WINDOWS NT 4.0, WINDOWS CE, WINDOWS XP, and WINDOWS VISTA, all of which are manufactured by Microsoft Corporation of Redmond, Washington; MacOS, manufactured by Apple Computer of Cupertino, California; OS/2, manufactured by International Business Machines of Armonk, New York; and Linux, a freely-available operating system distributed by Caldera Corp. of Salt Lake City, Utah, or any type and/or form of a Unix operating system, among others.

The computer system 100 can be any workstation, desktop computer, laptop or notebook computer, server, handheld computer, mobile telephone or other portable telecommunication device, media playing device, a gaming system, mobile computing device, or any other type and/or form of computing, telecommunications or media device that is capable of communication and that has sufficient processor power and memory capacity to perform the operations described herein. For example, the computer system 100 may comprise a device of the IPOD family of devices manufactured by Apple Computer of Cupertino, California, a PLAYSTATION 2 , PLAYSTATION 3, or PERSONAL PLAYSTATION PORTABLE (PSP) device manufactured by the Sony Corporation of Tokyo, Japan, a NINTENDO DS, NINTENDO GAMEBOY, NINTENDO GAMEBOY ADVANCED or NINTENDO REVOLUTION device manufactured by Nintendo Co., Ltd., of Kyoto, Japan, or an XBOX or XBOX 360™ device manufactured by the Microsoft Corporation of Redmond, Washington.

In some embodiments, the computing device 100 may have different processors, operating systems, and input devices consistent with the device. For example, in one embodiment, the computing device 100 is a Treo 180, 270, 600, 650, 680, 700p, 700w, or 750 smart phone manufactured by Palm, Inc. In some of these embodiments, the Treo smart phone is operated under the control of the PalmOS operating system and includes a stylus input device as well as a five-way navigator device.

In other embodiments the computing device 100 is a mobile device, such as a JAVA-enabled cellular telephone or personal digital assistant (PDA), such as the i55sr, i58sr, i85s, i88s, i90c, i95c1, or the im1100, all of which are manufactured by Motorola Corp. of Schaumburg, Illinois, the 6035 or the 7135, manufactured by Kyocera of Kyoto, Japan, or the i300 or i330, manufactured by Samsung Electronics Co., Ltd., of Seoul, Korea.

In still other embodiments, the computing device 100 is a Blackberry handheld or smart phone, such as the devices manufactured by Research In Motion Limited, including the Blackberry 7100 series, 8700 series, 7700 series, 7200 series, the Blackberry 7520, or the Blackberry Pearl 8100. In yet other embodiments, the computing device 100 is a smart phone, Pocket PC, Pocket PC Phone, or other handheld mobile device supporting Microsoft Windows Mobile Software. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

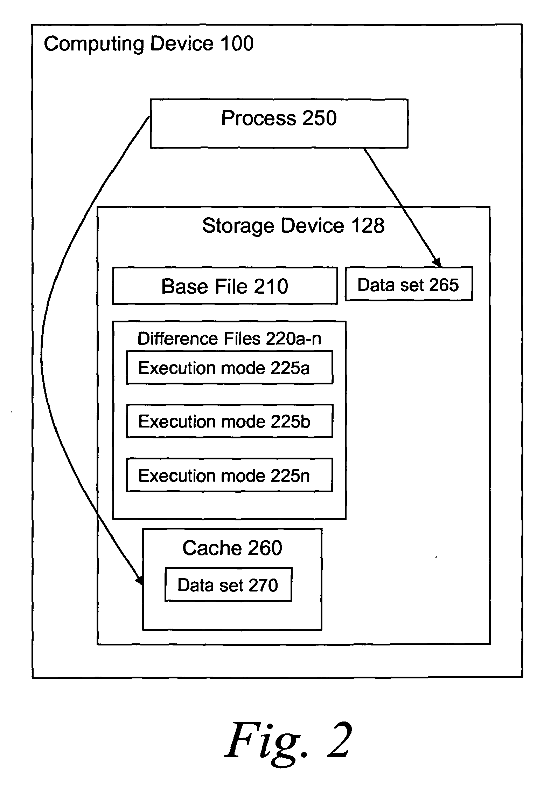

Referring now to FIG. 2, a block diagram depicts one embodiment of a system for responding to read requests for a data block of a storage device, the storage device providing access to a hardened appliance and providing unrestricted access to a computing device. In brief overview, the system includes a computing device 100, a storage device 128, and a cache 260. The computing device 100 executes in a requested one of a plurality of execution modes. A process 250 intercepts a read request for a first data set 265 stored in the data block on the storage device 128. The cache 260 stores a second data set 270 representing an unmodified version of the first data set 265. The process 250 responds to the read request with the second data set 270.

Referring now to FIG. 2, and in greater detail, the computing device 100 executes in a requested one of a plurality of execution modes. In some embodiments, a computing device 100 provides a plurality of types of access to a user. In one of these embodiments, the computing device 100 provides a user with the option of executing an operating system in one of a plurality of execution modes, the plurality of execution modes including an execution mode providing read-write access to a storage device associated with the computing device. In another of these embodiments, the computing device 100 provides a user with the option of executing an operating system in one of a plurality of execution modes, the plurality of execution modes including an execution mode providing read-only access to a storage device associated with the computing device. In still another of these embodiments, the computing device 100 provides a user with the option of executing an operating system in one of a plurality of execution modes, the plurality of execution modes including an execution mode providing intercepted write access to the storage device. In this embodiment, a request to write to a data block on the storage device is intercepted by a process executing on the computing device 100 and the process grants the request after making a copy of the data block. In yet another of these embodiments, the computing device 100 provides a user with the option of executing an operating system in one of a plurality of execution modes, the plurality of execution modes including an execution mode providing intercepted read access to the storage device. In this embodiment, a request to read data from a data block on the storage device is intercepted by a process executing on the computing device 100. The process may grant the request to read data from the data block. Alternatively, the process may respond to the request with data associated with the requested data block and stored on a cache, instead of with the data stored in the requested data block.

In one embodiment, the computing device 100 provides access to the functionality of a personal computer. For example, the computing device 100 may execute one or more applications, including, but not limited to, a desktop application form which other applications may execute, and the computing device 100 may provide the user with read-write access to a storage device associated with the computing device 100. In another embodiment, the computing device 100 executes software to control an appliance. For example, the computing device 100 may execute an application to control a television, medical device, or other appliance, which may comprise a part of the computing device 100 or be external to the computing device 100. In this embodiment, to provide efficient access to the appliance, the computing device 100 may provide limited access to a storage device. For example, the computing device 100 may intercept requests to read or write data from a first location on the storage device and re-direct the requests to a second location on the storage device. In this example, the computing device 100 may limit the access transparently, so that the user of the computing device 100 remains unaware of the nature of the access provided by the computing device 100. In another embodiment, the computing device 100 may limit the access transparently, so that applications executing on the computing device 100, including an operating system, remain unaware of the nature of the access provided by the computing device 100.

In one embodiment, a user requests one of the plurality of execution modes explicitly. In another embodiment, the user requests execution of a type of program and the computing device 100 identifies one of the plurality of execution modes in which to execute an operating system. In still another embodiment, the user interacts with a hardware device associated with the computing device to request execution of the computing device in one of the plurality of execution modes. For example, a user may press a button on the computing device to request one type of access, and press a second button to request a different type of access. As another example, a user may press a key or on a keyboard or other hardware device connected to the computing device to request a type of access. In some embodiments, the mechanisms for selecting an execution mode are fully extensible. For example, one of the function keys may be pressed during startup to identify the execution mode, or the system may respond to an infrared control input from a remote controller. Additionally, the execution mode may be selected by software during a previous boot, or the execution mode might be selected by application of a policy to a hardware or software component of the computing device 100.

To boot an operating system in a particular execution mode provided by the computing device 100, the CPU on the computing device 100 executes a Basic Input Output System (BIOS), which initializes the operating system and other components of the computing device 100. In some embodiments, operating systems include hibernate functionality. In one of these embodiments, operating systems that provide hibernate functionality implement technology such as the Advanced Configuration and Power Interface (ACPI) to do so. In another of these embodiments, the operating system stores the operating state prior to shutdown and, during a subsequent reboot process, the operating system can avoid the time-consuming initialization process by copying that stored state file back into the RAM and registers so that the system can continue operation from the point at which the state files were stored. In still another of these embodiments, operating system loader software processes a hibernate file and relies on the state stored in the hibernate file to initialize the data in RAM and the CPU registers. The hibernate file (also referred to herein as a state file) may be created to serve as a secure initialization point from which the system may always be booted. The system herein is described relative to operating systems such as the WINDOWS system, but it will be understood that the system may be applied to modifications of any number of operating systems, including those that do not have a hibernate function.

In some embodiments, a plurality of hibernate files are stored in nonvolatile memory, allowing the operating system to boot in different execution modes, or contexts. For example, in one of these embodiments, a hibernate file in the plurality of hibernate files allows an operating system to boot into a television context, while a second hibernate file in the plurality of hibernate files allows an operating system to boot into a desktop context. Other application contexts may be provided; for example, a hibernate file may enable the booting of an operating system in control of, or comprising, a medical device, such as such as an x-ray machine controller.

To more efficiently store and process the hibernate files, without storing multiple complete files, in some embodiments, and as shown in FIG. 2, a base file 210 and a plurality of difference files 220 are created, each difference file associated with an execution mode 225 and identifying at least one difference between the base hibernate file 210 and a state required for the loading of an execution mode 225. For example, a base file 210 may result in the execution of an operating system in a desktop execution mode 225; loading the difference file 220 associated with the execution mode 225 results in the execution of an operating system in a desktop mode, the execution of an application and the display of user activity data from a previous session. With the modified hibernate file, the system begins at a desired state, for example, by displaying an executing application program, such as a word processing program in a desktop application or a medical application program associated with a medical device. During initialization, the system is notified of a requested execution mode and the operating system processes hibernate and difference files selected according to the requested execution mode.

In some embodiments, a user - such as a manufacturer or administrator - runs a utility to create a base state file in hiberfil.sys. In one of these embodiments, the user shuts down the system and re-boots the system using the stored hiberfil.sys file. In another of these embodiments, the user operates the system until the system reaches a desired state. For example, the user executes the operating system until a desired application program is opened or processed, or until the system reaches a state at which the user intends the system to begin when in a particular execution mode. In still another of these embodiments, the user executes the utility, which creates a new base state file (hiberfil.sys file), compares that new file to the base state file, and creates at least one difference file storing an identification of at least one difference between the new file and the initial base state file (saved as, for example, the hiberdif.sys files). In yet another of these embodiments, the base state file and the at least one difference file are stored in the nonvolatile memory for access during booting.

In one embodiment, once the system boots in an execution mode, the changes to the operating system that occur due to system operations and user activity are stored in a volatile location. In this embodiment, when an initial session is ended and the system is powered down, the changes made during the session are lost. Upon loading that execution mode in a subsequent session, the operating system is displayed to the user as it was before the user activity in the initial session.

In some embodiments, a user may choose to store session activity data into a persistent, non-volatile device, extending the state file for the given execution mode to include changes made by the user in the session. In one of these embodiments, after saving the session activity data, the user powers off the system but the activity data is not lost. In another of these embodiments, upon loading the execution mode in a second session, the execution mode now includes the previously-made changes, which were integrated into the state file.

In one embodiment, a disk class write filter - a filter operating below the file system - intercepts write requests and records the write request to a session cache (which can be stored on any media) instead of allowing the write request to pass through to the storage device 128. In another embodiment, when a read request is intercepted, the system checks the session cache first and responds with data from the session cache if available. If not, the read request is passed through to the storage device. In still another embodiment, the session cache gets saved as a snapshot of Time1 - a differences file, listing differences between the state of the storage device at Time0 and the state of the storage device after a series of read and write requests. In yet another embodiment, a user may later boot the snapshot of T₁ instead of booting the image of the disk at To. For example, the applications required to boot the machine as a television appliance instead of a desktop computer may be opened after To and the session cache saved as a snapshot at T₁ once all the applications are opened.

In some embodiments, the system displays to users different data from the data stored in a storage device 128 associated with the computing device 100 based on a type of execution mode in which the computing device 100 executes. In one of these embodiments, in a first session where the computing device 100 operates in a first execution mode, a first user stores session activity data. In another of these embodiments, the stored session activity data is displayed to the first user in a second session, where the computing device 100 operates in the first execution mode. In still another of these embodiments, the stored session activity data is not displayed to the first user in a second session, where the computing device 100 operates in a second execution mode. In yet another of these embodiments, the stored session activity data is not displayed to a second user in a first session, where the computing device 100 operates in the first execution mode.

In one of these embodiments, the system provides greater flexibility to users who may wish to save data when executing in one mode while viewing an unchanged version of the computing device when executing in a second mode. In another of these embodiments, users in certain execution modes may store session data without impacting the length of time required to complete the boot process for other execution modes. In still another of these embodiments, the system uses a process 250 and a cache 260 to determine whether to display stored data to a user in a particular execution mode.

Referring still to FIG. 2, a process 250 intercepts a read request for the first data set 265 stored in the data block on the storage device 128 and responds to the read request with the second data set 270. In one embodiment, the process 250 is a hook process. In another embodiment, the process 250 is a filter driver. In still another embodiment, the process 250 is a read filter. In yet another embodiment, the process 250 is a write filter.

The cache 260 stores the second data set 270 representing an unmodified version of the first data set 265 stored in a data block on the storage device 128. In one embodiment, the process 250 accesses the cache 260 to retrieve the second data set 270. In another embodiment, the process 250 uses the data set 270 to respond to the request for the data set 265. In some embodiments, the cache 260 stores a lookup table. In other embodiments, the second data set 270 stores an identification of when the data block was last modified, and an identification of a state of a data block before the last modification was made. In still other embodiments, the data set 270 stores a modified copy of the data block generated by the process 250.

In some embodiments, the system includes a second process 250' (not shown) intercepting a request to write data to a data block of the storage device 128. In one of these embodiments, the process 250 includes the functionality of the second process 250'. In another of these embodiments, the second process 250' intercepts the write request when the computing device 100 is executing in an intercepted write mode, in which a user is allowed to write data to a data block on the storage device 128 after a process 250 has copied the data currently stored in the data block. In still another of these embodiments, the process 250' stores the unmodified version of the data block in the cache 260 prior to the execution of the write request. In yet another of these embodiments, the second process 250' allows the request to write data to the data block, which results in a modification to a data set in the data block.

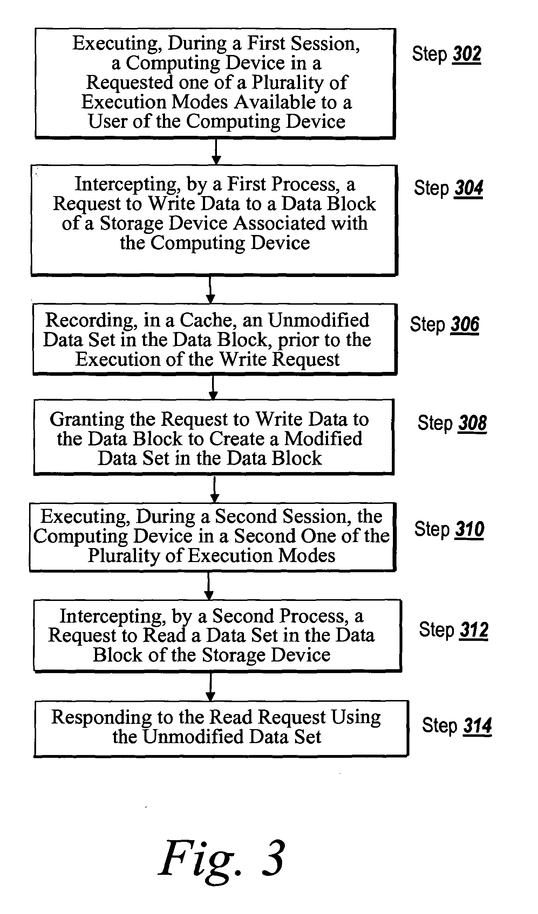

Referring now to FIG. 3, a flow diagram depicts one embodiment of the steps taken in a method for responding to read requests for a data block of a storage device, the storage device providing access to a hardened appliance and providing unrestricted access to a computing device. In brief overview, during a first session, a computing device is executed in a requested one of a plurality of execution modes available to a user of the computing device (step 302). A first process intercepts a request to write data to a data block of a storage device associated with the computing device (step 304). An unmodified data set in a data block is recorded in a cache, prior to the execution of the write request (step 306). The request to write data to the data block is granted, creating a modified data set in the data block (step 308). During a second session, the computing device is executed in a second one of the plurality of execution modes (step 310). A second process intercepts a request to read a data set in the data block of the storage device (step 312). The read request is responded to using the unmodified data set (step 314).

Referring to FIG. 3, and in greater detail, during a first session, a computing device is executed in a requested one of a plurality of execution modes available to a user of the computing device (step 302). In one embodiment, a user requests execution of the computing device in one of the plurality of execution modes. In another embodiment, the computing device selects an execution mode from the plurality of execution modes responsive to a request from a user to execute an application. In still another embodiment, to execute a computing device in a requested execution mode, a state file is selected and an operating system is restored to a pre-defined state responsive to data in the base file as described above in connection with FIG. 2.

A first process intercepts a request to write data to a data block of a storage device associated with the computing device (step 304). In one embodiment, the first process is a process 250 as described above in connection with FIG. 2. In another embodiment, the first process intercepts the request when the operating system executes in an execution mode providing the user with intercepted write access.

An unmodified data set in a data block is recorded in a cache, prior to the execution of the write request (step 306). In one embodiment, the process 250 identifies the requested data block and copies the data block, or an identification of a state of the data block, to a cache. In another embodiment, a process 250 stores the unmodified data set in the cache 260. In still another embodiment, a process 250 stores an identification of the state of the unmodified data set in the cache 260. In yet another embodiment, the unmodified data set in a data block is recorded in a cache 260 prior to the execution of the write request when the operating system executes in an execution mode providing the user with intercepted write access.

The request to write data to the data block is granted, creating a modified data set in the data block (step 308). During a second session, the computing device is executed in a second one of the plurality of execution modes (step 310). In one embodiment, to execute a computing device in a requested execution mode, a state file is selected and an operating system is restored to a pre-defined state responsive to data in the state file as described above in connection with FIG. 2.

A second process intercepts a request to read a data set in the data block of the storage device (step 312). In one embodiment, the second process is a process 250. In another embodiment, the second process is a process 250' as described above in connection with FIG. 2. In still another embodiment, the process 250 provides the functionality of the second process, in addition to the functionality described above.

In one embodiment, the process 250 determines whether the requested data block includes a modification to the first data set 265, the modification performed during a previously-executed session. In some embodiments, the process 250 accesses a lookup table to determine whether the requested data block includes a modification to the first data set 265, the modification performed during a previously-executed session. In one of these embodiments, the lookup table includes a listing of data block identifiers and, for each identified data block, an identification of when the identified data block was last modified, and an identification of a state of a data block before the last modification was made. In another of these embodiments, the process 250 determines that lookup table includes an identification of the requested data block. In still another of these embodiments, the process 250 compares the current state of the requested data block with the identification of the state of the data block before the last modification as indicated by the lookup table.

The read request is responded to using the unmodified data set (step 314). In one embodiment, the process 250 responds the read request using the unmodified data set. In another embodiment, the process 250 makes a determination as to whether the requested data block includes a previous modification to the first data.

In some embodiments, the process 250 modifies a requested data block, returning the requested data block to the state identified in the lookup table. In one of these embodiments, the process 250 responds to the request for the data block with the modified data block. In another of these embodiments, the process 250 stores the modification of the data block in the cache 260. In still another of these embodiments, the process 250 does not store the modification of the data block and the unmodified version of the data block remains on the storage device for use in subsequent sessions. In other embodiments, the process 250 creates a copy of the requested data block having the state identified in the lookup table. In one of these embodiments, the process 250 responds to the request for the data block with the copy of the data block. In another of these embodiments, the process 250 stores the copy of the data block in the cache 260. In still another of these embodiments, the process 250 does not store the copy of the data block and the changes are lost at the end of the session.

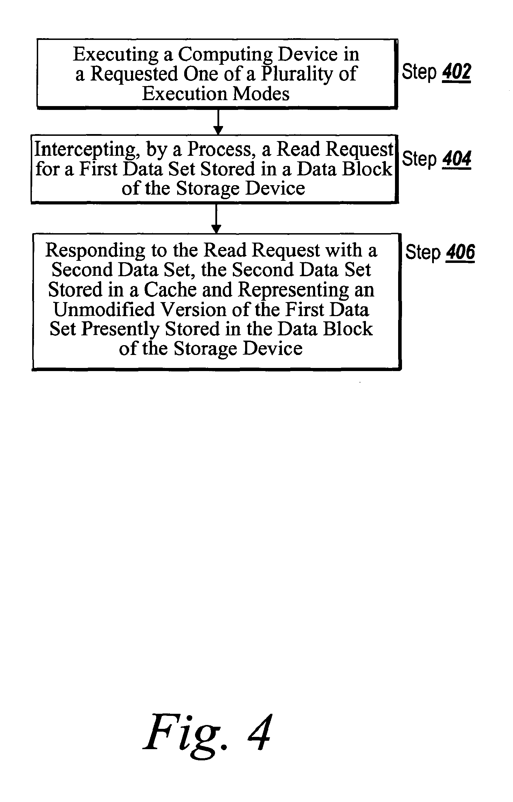

Referring now to FIG. 4, a flow diagram depicts one embodiment of the steps taken in providing access to a computing device. A computing device is executed in a requested one of a plurality of execution modes (step 402). In one embodiment, the computing device executes in the requested execution mode as described above in connection with FIG. 2. A process intercepts a request to read a first data set stored in the data block of the storage device (step 404). In one embodiment, the process is a process 250 as described above in connection with FIG. 2. In another embodiment the process intercepts the read request as described above in connection with FIG. 3. The read request is responded to with a second data set, the second data set stored in a cache and representing an unmodified version of the first data set stored in the data block on the storage device (step 406). In one embodiment, a process 250 responds to the read request by providing a second data set 270 stored in a cache 260. In another embodiment, the process 250 generates the second data set 270 by accessing an identification of a state of the first data set 265 prior to a modification and generating a copy of the first data set having the identified state. In still another embodiment, the process 250 responds to the read request as describe above in connection with FIG. 3.

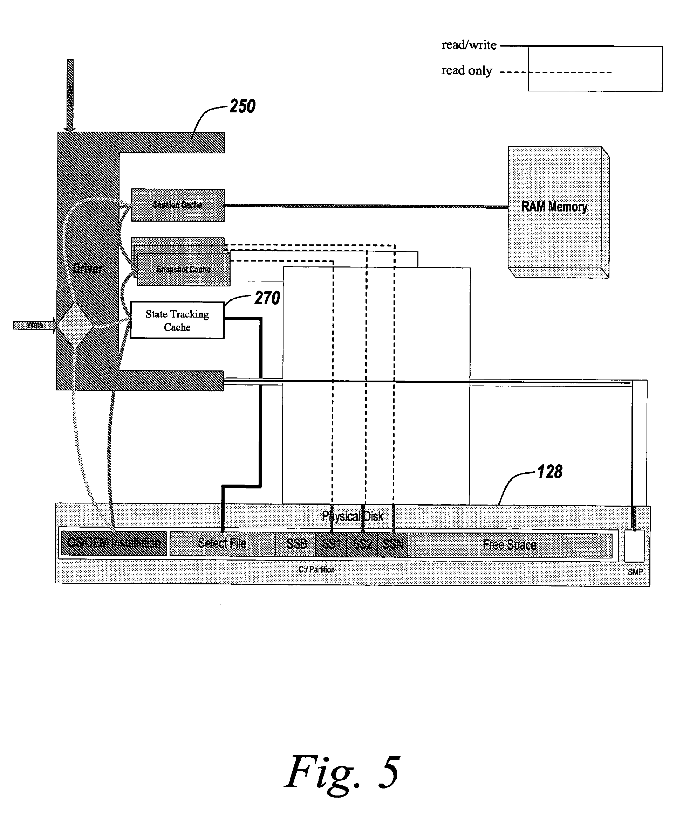

Referring now to FIG. 5, a block diagram depicts one embodiment of a process 250 and a cache 270 in a system for providing access to a computing device. A plurality of caches 270 are depicted on the physical disk 128 as cache SS1-SSN. In some embodiments, a cache 270 is referred to as a state tracking cache.

In some embodiments, a partition on the storage device 128 includes software for executing an operating system in a requested execution mode. In one of these embodiments, a partition is a partition in a locked file in a drive on the storage device 128. In another of these embodiments the partition is an area that has a boot loader to direct the operating system to a snapshot file from which to boot an image. In still another of these embodiments, a master boot record references a partition boot record modified to enable the appropriate image to boot. In still even another of these embodiments, a snapshot file in the partition stores raw data associated with the sectors in the partition. In yet another embodiment, a partition includes a partition boot record, a configuration file (maintaining information for loading registries and file system entries), a record area (for example, a table, such as a FAT table, that keeps track of blocks and creates snapshot areas), the cache 270, and the snapshot files.

In some embodiments, use of the cache 270 enables users in a desktop mode to make changes to the storage device 128 and also fast boot snapshots when executing in other modes.
In one embodiment, when a write request for a particular data block on the storage device 128 is intercepted, a disk class filter 250 records, in the cache 270, the state of the data block as it exists at the time the write request is received. In another embodiment, the changes needed to roll back the disk to a previous To are recorded in the cache 270 enabling a process 250 to present to the operating system a view of the storage device at To. In still another embodiment, after the process 250 makes the recording in the cache 270, the write request passes through to the storage device 128 and modifies the data block. In yet another embodiment, when responding to read requests, if there is an entry in the cache 270 for the requested sector, a read filter - which may be part of the process 250 or a separate process 250' - redirects the requests to the cache 270. Otherwise the read request is passed through to the disk.

In one embodiment, when a user powers on the machine, they use a remote control, or press a physical button on a computing device, to select one of a plurality of pre-loaded snapshot images - such as a TV or media player appliance image - or to request a desktop mode. In another embodiment, if the user chooses to execute in desktop mode, they will have read-write access to the disk. However, before any write requests are allowed to modify a sector of the disk, the state of the sector is recorded to a cache (the cache 26) as described above. In still another embodiment, when a user next powers on and selects a snapshot image, the cache 260 is used to remove the changes made by the user in desktop mode. For example, and in one embodiment, if a user modified a sector in desktop mode, the cache 260 identifies the contents of the sector prior to the modification and presents those contents as the state of the disk at time To. The snapshot, which is a list of differences between the state of the disk at time To and at time T₁ then uses the To presented by the cache 260 to load the image required by the user. Write requests made during the session with the snapshot go to the RAM file. When a user next powers on in desktop mode, the disk as it was last modified is presented to the user, without revision by the cache 260.

In some embodiments, a method for providing a level of access to a computing device, the level selected according to a requested execution mode and a storage device associated with the computing device providing both access to a hardened appliance and unrestricted access to the computing device, includes the step of mounting a virtual drive. During a first session, a computing device is executed in a requested one of a plurality of execution modes available to a user of the computing device. A first process 250 intercepts a request to write data to a data block of the storage device. A cache 260 stores an unmodified data set in the data block, prior to the execution of the write request. The first process 250 grants the request to write data to the data block to create a modified data set in the data block. During a second session, the computing device is executed in a second one of the plurality of execution modes. A user of the computing device mounts a virtual drive comprising a view of the storage device including the changes made in the first session. A second process 250' intercepts a request to read a data set in the data block of the storage device. The second process 250' identifies the data block as a data block modified during the first session. The second process 250' responds to the read request by accessing the mounted virtual drive to retrieve the data modified during the first session.

In one of these embodiments, when a user executes the computing device 100 in a desktop mode and writes to the disk as part of that session, the changes written to the disk are unavailable to the user should he or she later boot into a snapshot mode, because the cache 260 and the snapshot at T₁ combined will present an image of the disk without those changes. However, a user may wish to access the changes made in a desktop session from a snapshot session. For example, if a user downloads a movie and saves it to disk in a desktop session, the user may wish to access the movie from a media player session. If the cache 260 functions to prevent the user from seeing a modified disk, the user is unable to do this. Therefore, in some embodiments, the system allows a user to mount a virtual drive comprising a second version of the disk. In one of these embodiments, the computing device 100 executes in an execution mode providing intercepted read access - the process 250 presents the operating system, and the user, with a view of the storage device without any changes made in a previous session. In another of these embodiments, the user mounts a virtual drive comprising a view of the storage device including the changes made in the previous session. In still another of these embodiments, the process 250 allows read requests directed to data blocks in the virtual drive to access the data stored on the storage device. That is, the user executes the computing device in a snapshot mode (and sees a first version of the disk as presented by the combination of the cache 260 and the snapshot) but also mounts a virtual version of the disk as it was modified and as it would be presented if the user were in desktop mode. Write requests are handled as described above in connection FIG. 2.

The systems and methods described above may be implemented as a method, apparatus or article of manufacture using programming and/or engineering techniques to produce software, firmware, hardware, or any combination thereof. The systems and methods described above may be provided as one or more computer-readable programs embodied on or in one or more articles of manufacture. The term "article of manufacture" as used herein is intended to encompass code or logic accessible from and embedded in one or more computer-readable devices, firmware, programmable logic, memory devices (e.g., EEPROMs, ROMs, PROMs, RAMs, SRAMs, etc.), hardware (e.g., integrated circuit chip, Field Programmable Gate Array (FPGA), Application Specific Integrated Circuit (ASIC), etc.), electronic devices, a computer readable non-volatile storage unit (e.g., CD-ROM, floppy disk, hard disk drive, etc.), a file server providing access to the programs via a network transmission line, wireless transmission media, signals propagating through space, radio waves, infrared signals, etc. The article of manufacture includes hardware logic as well as software or programmable code embedded in a computer readable medium that is executed by a processor. In general, the computer-readable programs may be implemented in any programming language, LISP, PERL, C, C++, PROLOG, or any byte code language, such as JAVA. The software programs may be stored on or in one or more articles of manufacture as object code.

Having described certain embodiments of methods and systems for providing access to a computing device, it will now become apparent to one of skill in the art that other embodiments incorporating the concepts of the invention may be used. Therefore, the invention should not be limited to certain embodiments, but rather should be limited only by the spirit and scope of the following claims.

## Claims

1. A method for providing a level of access to a computing device, the level selected according to a requested execution mode and a storage device associated with the computing device providing both access to a hardened appliance and unrestricted access to the computing device, the method comprising:
executing, during a first session, a computing device in a requested one of a plurality of execution modes available to a user of the computing device;
intercepting, by a first process, a request to write data to a data block of the storage device;
recording, in a cache, an unmodified data set in the data block, prior to the execution of the write request;
granting the request to write data to the data block to create a modified data set in the data block;
executing, during a second session, the computing device in a second one of the plurality of execution modes;
intercepting, by a second process, a request to read a data set in the data block of the storage device; and
responding to the read request using the unmodified data set.

2. The method of claim 1 further comprising the steps of:
executing, during a third session, the computing device in a third one of the plurality of execution modes;
intercepting, by a third process, a request to read data in the data block of the storage device; and
granting the request to read data in the data block of the storage device.

3. The method of claim 1 wherein the step of executing, during the second session, the computing device, further comprises the steps of:
selecting a state file; and
restoring the computing device to a pre-defined state responsive to data in the state file.

4. A system for providing a level of access to a computing device, the level selected according to a requested execution mode and a storage device associated with the computing device providing both access to a hardened appliance and unrestricted access to the computing device comprising:
a first operating system executing in a requested one of a plurality of execution modes available to a user of a computing device, the requested one of the plurality of execution modes providing write access to a storage device associated with the computing device;
a first process intercepting a request to write data to a data block of the storage device and granting the request to write data to the data block to create a modified data set in the data block;
a cache storing an unmodified data set in the data block, prior to the execution of the write request;
a second operating system executing in a second one of a plurality of execution modes, the second one of the plurality of execution modes providing read-only access to a storage device associated with a computing device; and
a second process intercepting a read request for the data set stored in the data block of the storage device and responding to the read request with the unmodified data set stored in the cache.

5. The system of claim 4, wherein the first operating system executes during a first session, and the second operating system executes during a second session.

6. The system of claim 4, wherein the first process further comprises a write filter intercepting the write request for the data stored in the data block of the storage device.

7. The system of claim 4 further comprising means for selecting a state file; and restoring the computing device to a pre-defined state responsive to data in the state file.

8. The system of claim 4, wherein the second process further comprises means for determining whether the requested data block comprises a modification to the first data, the modification performed during a previously-executed session.

9. The system of claim 4, wherein the second process further comprises means for accessing a lookup table to determine whether the requested data block comprises a modification to the first data, the modification performed during a previously-executed session.

10. The system of claim 4, wherein a hook process intercepts a read request for the data set stored in the data block of the storage device.

11. The system of claim 4, wherein a filter driver intercepts the read request for the data set stored in the data block of the storage device.

12. The system of claim 4, wherein a write filter intercepts the read request for the data set stored in the data block of the storage device.

13. A computer readable medium having instructions thereon that when executed provide a method for providing a level of access to a computing device, the level selected according to a requested execution mode and a storage device associated with the hard drive providing both access to a hardened appliance and unrestricted access to a computing device, the computer readable medium comprising:
instructions to execute, during a first session, a computing device in a requested one of a plurality of operating system execution modes available to a user of a computing device, the requested one of the plurality of operating system execution modes providing write access to a hard drive associated with the computing device;
instructions to intercept, by a first process, a request to write data to a data block of the storage device;
instructions to record, in a cache, an unmodified data set in the data block, prior to the execution of the write request;
instructions to grant the request to write data to the data block to create a modified data set in the data block;
instructions to execute, during a second session, the computing device in a second one of the plurality of execution modes, the second one of the plurality of operating system execution modes providing read-only access to the hard drive;
instructions to intercept, by a second process, a request to read a data set in the data block of the hard drive; and
instructions to respond to the read request using the unmodified data set.

14. The computer readable medium of claim 13, wherein the instructions to intercept a request to write data comprises instructions to intercept, by a write filter, the write request for the data stored in the data block of the storage device.

15. The computer readable medium of claim 16 wherein the instructions to execute, during the second session, the computing device, further comprises instructions to select a state file; and instructions to restore the computing device to a pre-defined state responsive to data in the state file.

16. The computer readable medium of claim 16 further comprising instructions to execute, during a second session, the computing device in a second one of the plurality of operating system execution modes, the second one of the plurality of operating system execution modes providing write access to the hard drive; instructions to intercept, by a hook process, a request to read data in a data block of the storage device; and instructions to grant the request to read data in the data block of the storage device.
